# EUROPÄISCHE PATENTSCHRIFT

(11) **EP 3 645 350 B1**
(45) Veröffentlichungstag und Bekanntmachung des Hinweises auf die Patenterteilung: **09.06.2021**
(21) Anmeldenummer: 18723435.6
(22) Anmeldetag: 26.04.2018
(51) Int. Cl.: B60T 1/08, B60T 10/02, B60T 10/04

(54) **VERFAHREN ZUM EINLERNEN VON BREMSSTUFEN-SCHWELLWERTEN EINER IN BREMSSTUFEN GESCHALTETEN DAUERBREMSE SOWIE BREMSSYSTEM**
METHOD FOR LEARNING BRAKING STEP THRESHOLD VALUES OF A SUSTAINED-ACTION BRAKE OPERATED IN BRAKING STEPS, AND BRAKING SYSTEM
PROCÉDÉ D'APPRENTISSAGE DE VALEURS SEUIL DE PALIERS DE FREINAGE D'UN FREIN D'ENDURANCE COUPLÉ À DES PALIERS DE FREINAGE ET SYSTÈME DE FREINAGE

(30) Priorität: 26.06.2017 DE 102017006031
(43) Veröffentlichungstag der Anmeldung: 06.05.2020
(73) Patentinhaber: ZF CV Systems Hannover GmbH, 30453 Hannover (DE)
(72) Erfinder: HANSLIK, Daniel, 30916 Isernhagen (DE); KALLENBACH, Stephan, 30161 Hannover (DE); RAGAB, Ahmed, 30453 Hannover (DE)
(74) Vertreter: Rabe, Dirk-Heinrich
(86) Internationale Anmeldenummer: PCT/EP2018/060738
(87) Internationale Veröffentlichungsnummer: WO 2019/001799

(56) Entgegenhaltungen:
- EP-A1- 0 937 619
- EP-A1- 1 431 149
- EP-A1- 2 123 500
- WO-A1-2006/119849
- DE-A1- 4 446 085
- DE-A1-102004 048 121
- DE-A1-102009 016 816
- DE-B3-102012 020 937
- US-A1- 2008 071 453

## Beschreibung

Die Erfindung betrifft ein Verfahren zum Einlernen von Bremsstufen-Schwellwerten einer in Bremsstufen geschalteten Dauerbremse in einem Nutzfahrzeug, insbesondere in einem Lastkraftwagen oder in einem Omnibus, sowie ein Bremssystem, in dem das Verfahren durchführbar ist.

Elektronische Bremssysteme (EBS) in Nutzfahrzeugen können unterschiedliche Arten von Bremsen aufweisen. Demnach können Betriebsbremsen, z. B. Reibungsbremsen, vorgesehen sein und zusätzlich auch Dauerbremsen bzw. Retarder, mit denen das Nutzfahrzeug im Fall einer primären Dauerbremse durch Bewirken einer Motorbremsung mit einem dadurch erzeugten Dauerbrems-Ist-Bremsmoment über die angetriebenen Räder des Nutzfahrzeuges abgebremst werden kann. Als derartige primäre Dauerbremsen sind Motorstaubremsen bzw. Auspuffklappenbremsen (Exaust Retarder, XR) bekannt, die durch gezieltes zumindest teilweises Verschließen des Auspuffrohres über eine Stauklappe eine Verringerung einer Motordrehzahl und somit eine Motorbremsung bewirken können. Weiterhin sind als primäre Dauerbremsen auch Dekompressionsbremsen (Engine Retarders, ER) bekannt, die durch ein gezieltes Belüften der Zylinder im Motor im entsprechenden Moment eine Verringerung der Motordrehzahl erreichen können, so dass auch darüber eine Motorbremsung bewirkt werden kann.

Derartige primäre Dauerbremsen ermöglichen ein verschleißfreies Aufbauen eines Dauerbrems-Bremsmomentes im Fahrzeug, so dass diese in einem Bremssystem dazu genutzt werden können, bei Vorliegen einer Bremsanforderung den Verschleiß der Betriebsbremsen zu minimieren, indem in den entsprechenden Situationen eine Ansteuerung der Dauerbremse anstatt oder ergänzend zu der Ansteuerung der Betriebsbremsen stattfindet, um die Bremsanforderung umzusetzen. Eine Ansteuerung der Dauerbremse kann hierbei manuell über einen Hebel oder ein Pedal durch den Fahrer erfolgen und/oder aber automatisiert durch ein Assistenz-Regelsystem, das ausgebildet ist, das Nutzfahrzeug in Abhängigkeit von vorgegebenen Parametern automatisiert abzubremsen, z.B. im Rahmen einer adaptiven Geschwindigkeitsregelung (ACC), einer Fahrdynamikregelung (ESP) oder eines Tempomaten (CC). Die EP 2123500 A1 offenbart ein Verfahren und eine Vorrichtung zur Ermittlung der Ein- und Ausschaltbedingungen für eine Motorbremseinrichtung einer Dauerbremsanlage eines Fahrzeugs, bei dem in Abhängigkeit von vorgegebenen Fahrparametern ein Dauerbremsmoment an einer Abtriebswelle eines Abtriebsstrangs mittels einer von einer Steuereinrichtung der Dauerbremsanlage von einer Motorbremseinrichtung und von einer Retardereinrichtung angeforderten Bremsmomentes eingestellt wird. Die Aktivierung und die Deaktivierung der Motorbremseinrichtung wird in Abhängigkeit von wenigstens einem in Abhängigkeit von einer Antriebswellendrehzahl der Abtriebswelle ermittelten Momentenschwellwertes vorgegeben.

Nachteilig bei der automatisierten Ansteuerung ist, dass derartige Dauerbremsen unter Umständen in Bremsstufen betrieben werden, d.h. die Dauerbremse kann lediglich diskrete Werte für das Dauerbrems-Ist-Bremsmoment erzeugen. Diese diskreten Werte liegen je nach Ausführung der Dauerbremse beliebig verteilt zwischen einem minimalen Dauerbrems-Bremsmoment, das einem passiven Betriebsmodus der Dauerbremse entspricht, und einem maximalen Dauerbrems-Bremsmoment, das eine zum Zeitpunkt der Ansteuerung der Dauerbremse maximal mögliche Bremswirkung der Dauerbremse charakterisiert.

Wird eine derartige in Bremsstufen betriebene Dauerbremse von einem der Assistenz-Regelsysteme stufenlos angesteuert, indem eine Bremsanforderung in Form einer bestimmten Bremsanforderungs-Sollgröße, z. B. eines Dauerbrems-Soll-Bremsmoment, stufenlos an die Dauerbremse vorgegeben wird, kann es ohne die Kenntnis von Bremsstufen-Schwellwerten, die angeben, wann die jeweilige Bremsstufe aktiviert oder deaktiviert wird, vorkommen, dass die Bremsanforderung durch die Dauerbremse nicht in optimaler Weise umgesetzt wird. Dies kann beispielsweise dann auftreten, wenn die automatisiert vorgegebene Bremsanforderungs-Sollgröße einen bestimmten Bremsstufen-Schwellwert, der einer für die Durchsetzung der Bremsanforderung optimalen Bremsstufe zugeordnet ist, nicht überschreitet und die jeweilige Bremsstufe dadurch nicht aktiviert wird. Demnach wird beispielsweise ein zu niedriges Dauerbrems-Ist-Bremsmoment erzeugt. In dem Fall wird als Ergänzung auf verschleißbehaftete Bremsen, z.B. Betriebsbremsen oder sekundäre Dauerbremsen zurückgegriffen, um eine der Bremsanforderung entsprechende Bremswirkung am Fahrzeug dennoch zu erfüllen. Dadurch kann jedoch ein verschleißoptimierter Bremsbetrieb des Bremssystems nicht sichergestellt werden.

Es ist daher Aufgabe der Erfindung, ein Verfahren zum Einlernen von Bremsstufen-Schwellwerten einer in Bremsstufen geschalteten Dauerbremse anzugeben, so dass eine zuverlässige und verschleißarme Bremsung eines Nutzfahrzeugs über die Dauerbremse gewährleistet werden kann. Weiterhin ist Aufgabe der Erfindung ein Bremssystem zum Durchführen des Verfahrens bereitzustellen.

Diese Aufgabe wird durch ein Verfahren nach Anspruch 1 sowie ein Bremssystem nach Anspruch 15 gelöst. In den Unteransprüchen sind bevorzugte Weiterbildungen angegeben.

Erfindungsgemäß ist demnach vorgesehen, in einem Einlernvorgang eine Dauerbrems-Ist-Bremswirkungsgröße, die infolge einer Ansteuerung einer Dauerbremse mit einer Bremsanforderungs-Sollgröße von der Dauerbremse erzeugt wird, und eine maximale Dauerbrems-Bremswirkungsgröße zu erfassen und daraus eine Bremswirkungsgrößen-Kennzahl zu bilden, die ein Verhältnis aus der Dauerbrems-Ist-Bremswirkungsgröße und der maximalen Dauerbrems-Bremswirkungsgröße charakterisiert. Dieser Bremswirkungsgrößen-Kennzahl kann anschließend einer Bremsstufe der Dauerbremse zugeordnet werden, wobei die Zuordnung derartig erfolgt, dass jeder Bremsstufe lediglich eine Bremswirkungsgrößen-Kennzahl zugeordnet ist.

Dadurch kann in dem Einlernvorgang vorteilhafterweise festgestellt werden, wie viele Bremsstufen bei einer Ansteuerung der Dauerbremse zur Verfügung stehen. Denn bei einer Änderung der Bremswirkungsgrößen-Kennzahl schaltet die Dauerbremse in eine andere Bremsstufe um, da dann von der Dauerbremse eine im Vergleich zur maximalen Dauerbrems-Bremswirkungsgröße veränderte Dauerbrems-Ist-Bremswirkungsgröße erzeugt wird. Da angenommen wird, dass von der Dauerbremse in jeder Bremsstufe jeweils eine andere diskrete Dauerbrems-Ist-Bremswirkungsgröße erzeugt wird, die in der jeweiligen Bremsstufe immer im gleichen Verhältnis zur maximalen Dauerbrems-Bremswirkungsgröße steht, kann über eine Veränderung der Bremswirkungsgrößen-Kennzahl also in einfacher Weise bereits eine Anzahl an Bremsstufen identifiziert werden, wenn die Bremsanforderungs-Sollgröße in einem oder in mehreren Einlernvorgängen entsprechend über das gesamte Spektrum der Bremsanforderung variiert wird.

Vorzugsweise kann hierbei aus einem Erhöhen der Bremswirkungsgrößen-Kennzahl infolge einer Ansteuerung der Dauerbremse mit der Bremsanforderungs-Sollgröße auf ein Aktivieren einer Bremsstufe, in der eine höhere Dauerbrems-Ist-Bremswirkungsgröße erzeugt wird, und bei einer Reduzierung der Bremswirkungsgrößen-Kennzahl infolge einer Ansteuerung der Dauerbremse mit der Bremsanforderungs-Sollgröße auf ein Deaktivieren der Bremsstufe und ein Aktivieren einer Bremsstufe, in der eine geringere Dauerbrems-Ist-Bremswirkungsgröße erzeugt wird, geschlossen werden. Die Bremsstufen können in Abhängigkeit davon je nach Bremswirkungsgrößen-Kennzahl mit einem Index versehen werden, wobei einer Bremsstufe mit einer niedrigeren Dauerbrems-Ist-Bremswirkungsgröße ein niedrigerer Index zugeordnet werden kann, so dass die Bremsstufen in Abhängigkeit der erzeugten Dauerbrems-Ist-Bremswirkungsgröße geordnet werden können. Dadurch kann eine spätere Ansteuerung vereinfacht werden.

Die Bremsanforderungs-Sollgröße kann hierbei vorzugsweise in Form einer Fahrzeug-Soll-Verzögerung, eines Dauerbrems-Soll-Bremsmomentes oder einer Dauerbrems-Soll-Bremskraft vorliegen. Die Bremsanforderungs-Sollgröße charakterisiert hierbei, wie stark das Nutzfahrzeug abgebremst werden soll, d. h. ob ein Erhöhen oder ein Reduzieren einer Fahrzeug-Ist-Verzögerung des Nutzfahrzeuges erfolgen soll, wobei dies durch Einstellen einer Bremswirkungsgröße der Dauerbremse erfolgt.

Als Bremswirkungsgrößen der Dauerbremse werden vorzugsweise ein Dauerbrems-Bremsmoment oder eine Dauerbrems-Bremskraft verwendet, die von der Dauerbremse erzeugt werden und die für eine entsprechende Verzögerungswirkung des Nutzfahrzeuges sorgen. Dies erfolgt, indem von der jeweiligen Dauerbremse, die beispielsweise als Motorstaubremse und/oder als Dekompressionsbremse ausgeführt sein kann, eine Motordrehzahl eines Motors des Nutzfahrzeuges verringert wird, woraufhin eine Motorbremsung ausgelöst wird. Die Motorbremsung bewirkt über angetriebene Räder des Nutzfahrzeuges eine Verzögerung desselben in Abhängigkeit der erzeugten Bremswirkungsgröße.

Der infolge der Ansteuerung der Dauerbremse mit der Bremsanforderungs-Sollgröße erzeugte Wert der Bremswirkungsgröße wird durch die Dauerbrems-Ist-Bremswirkungsgröße angegeben, die demnach ein Dauerbrems-Ist-Bremsmoment oder eine Dauerbrems-Ist-Bremskraft sein kann. Weiterhin gibt die maximale Dauerbrems-Bremswirkungsgröße - d.h. das maximale Dauerbrems-Bremsmoment oder die maximale Dauerbrems-Bremskraft - an, welche Bremswirkungsgröße von der Dauerbremse während einer Ansteuerung der Dauerbremse mit der Bremsanforderungs-Sollgröße maximal erzeugt werden kann.

Diese maximale Dauerbrems-Bremswirkungsgröße ist hierbei insbesondere abhängig von der Motordrehzahl des Motors. Dies hat zur Folge, dass sich durch die von der Dauerbremse ausgelöste Motorbremsung gleichzeitig auch die Motordrehzahl und demnach auch die maximale Dauerbrems-Bremswirkungsgröße verändern. Da normalerweise die in den jeweiligen Bremsstufen diskret erzeugten Dauerbrems-Ist-Bremswirkungsgrößen abhängig von der maximalen Dauerbrems-Bremswirkungsgröße sind, verändern sich die Dauerbrems-Ist-Bremswirkungsgrößen der jeweiligen Bremsstufe bei Veränderung der Motordrehzahl ebenso. Allerdings wird dadurch die Bremswirkungsgrößen-Kennzahl nicht beeinflusst, da das Verhältnis zwischen der in einer Bremsstufe erzeugten Dauerbrems-Ist-Bremswirkungsgröße und der maximalen Dauerbrems-Bremswirkungsgröße immer gleich bleibt.

Erfindungsgemäß wird außerdem die Bremsanforderungs-Sollgröße, infolge derer sich die Bremswirkungsgrößen-Kennzahl ergibt, als Bremsstufen-Schwellenwert derjenigen Bremsstufe, der die Bremswirkungsgrößen-Kennzahl zugeordnet ist, gespeichert. Der Bremsstufen-Schwellwert gibt hierbei an, bei welcher Bremsanforderungs-Sollgröße die jeweilige Bremsstufe aktiviert und/oder deaktiviert wird.

Dadurch kann vorteilhafterweise erreicht werden, dass nachdem eine Zuordnung zu einer Bremsstufe stattgefunden hat, die Bremsanforderungs-Sollgröße, die zu einer Aktivierung dieser Bremsstufe geführt hat, bereits als Schwellwert für dies Bremsstufe in einer folgenden Ansteuerung der Dauerbremse bei einer Umsetzung einer automatisiert angeforderten Bremsung berücksichtigt werden kann. Demnach ist bereits bekannt, bei welcher Bremsanforderung auf jeden Fall in diese Bremsstufe gewechselt wird und gleichzeitig auch, welche Dauerbrems-Ist-Bremswirkungsgröße von der Dauerbremse in dieser Bremsstufe erzeugt wird.

Das die Dauerbremse ansteuernde Steuermodul, beispielsweise ein Assistenz-Steuermodul, das ausgebildet ist, das Nutzfahrzeug in Abhängigkeit von vorgegebenen Parametern automatisiert abzubremsen, z. B. im Rahmen einer adaptiven Geschwindigkeitsregelung (ACC), einer Fahrdynamikregelung (ESP) oder eines Tempomaten (CC), kann somit zumindest teilweise die Charakteristik der Dauerbremse einlernen und diese bei einem Erzeugen einer Bremsanforderungs-Sollgröße berücksichtigen, um eine optimierte Verzögerungswirkung des Nutzfahrzeuges in der jeweiligen Situation einzustellen, ohne dabei auf verschleißbehaftete Bremsen zurückgreifen zu müssen. Als Nutzfahrzeuge kommen hierbei insbesondere Lastkraftwagen (LKW) oder Omnibusse in Frage.

Wird der Einlernvorgang mehrere Male wiederholt bzw. werden in einem Einlernvorgang mehrere Bremsanforderungs-Sollgrößen vorgegeben und von der Dauerbremse umgesetzt, können entsprechend mehrere Bremswirkungsgrößen-Kennzahlen und dementsprechend mehrere Bremsstufen identifiziert werden, um nach einer gewissen Zeit bzw. einer gewissen Anzahl an unterschiedlich identifizierten Bremswirkungsgrößen-Kennzahlen alle Bremsstufen der Dauerbremse zu erfassen und zuzuordnen. Bis alle Bremsstufen und Bremswirkungsgrößen-Kennzahlen identifiziert sind, hängt demnach davon ab, wie oft und mit wie vielen unterschiedlichen Bremsanforderungs-Sollgrößen die Dauerbremse vom Steuermodul während der Fahrt angesteuert wird.

In besonderes effektiver Weise erfolgt der Einlernvorgang also, wenn Bremsanforderungs-Sollgrößen beispielsweise in Form von kontinuierlich verlaufenden Rampen zwischen einem minimalen Dauerbrems-Bremsmoment der Dauerbremse, das in einem passiven Betriebsmodus der Dauerbremse erzeugt wird, und einem Referenz-Bremsmoment, das das maximal mögliche Dauerbrems-Bremsmoment - bei maximaler Motordrehzahl - bzw. die maximal mögliche Bremswirkungsgröße charakterisiert, angefordert werden. Demnach durchläuft die Bremsanforderungs-Sollgröße das gesamte mögliche Spektrum der Dauerbremse und es können alle möglichen Bremsstufen sowie die dazugehörigen Bremsstufen-Schwellwerte identifiziert, zugeordnet und entsprechend abgespeichert werden.

Da ein derartiger Einlernvorgang mit kontinuierlich verlaufenden Rampen im normalen Fahrbetrieb zu einer nicht beabsichtigten und ggf. unkontrollierten Bremsung führen würde und daher nicht umsetzbar ist, kann ein derartiges Vorgehen beispielsweise am Bandende (EOL) beim Hersteller vorgesehen sein. Dadurch kann vorteilhafterweise sichergestellt werden, dass jede beliebige Konfiguration der Dauerbremse, die vom Hersteller bereitgestellt werden kann, ohne gesonderte Parametrierung oder Softwareanpassung unterstützt und auch gleichzeitig in einfacher Weise eingelernt werden kann. Im Fahrbetrieb hingegen ist es vorteilhaft, wenn diskrete und nichtkontinuierliche Werte für die Bremsanforderungs-Sollgrößen z.B. von dem Assistenz-Steuermodul im Rahmen einer ohnehin durchzuführenden Abbremsung vorgegeben werden, anhand derer eingelernt wird.

Als Bremsstufen-Schwellwerte werden in einer Bremsstufe vorzugsweise Bremsstufen-Aktivierungs-Schwellwerte und Bremsstufen-Deaktivierungs-Schwellwerte unterschieden. Der Bremsstufen-Aktivierungs-Schwellwert gibt hierbei an, ab welchen Werten der Bremsanforderungs-Sollgröße bei einem Erhöhen der Fahrzeug-Ist-Verzögerung infolge der Ansteuerung der Dauerbremse mit dieser Bremsanforderungs-Sollgröße die jeweilige Bremsstufe aktiviert wird. Der Bremsstufen-Deaktivierungs-Schwellwert gibt hingegen an, ab welchen Werten der Bremsanforderungs-Sollgröße bei einem Reduzieren der Fahrzeug-Ist-Verzögerung infolge der Ansteuerung der Dauerbremse mit dieser Bremsanforderungs-Sollgröße die jeweilige Bremsstufe deaktiviert wird und demnach in eine niedrigere Bremsstufe umgeschaltet wird.

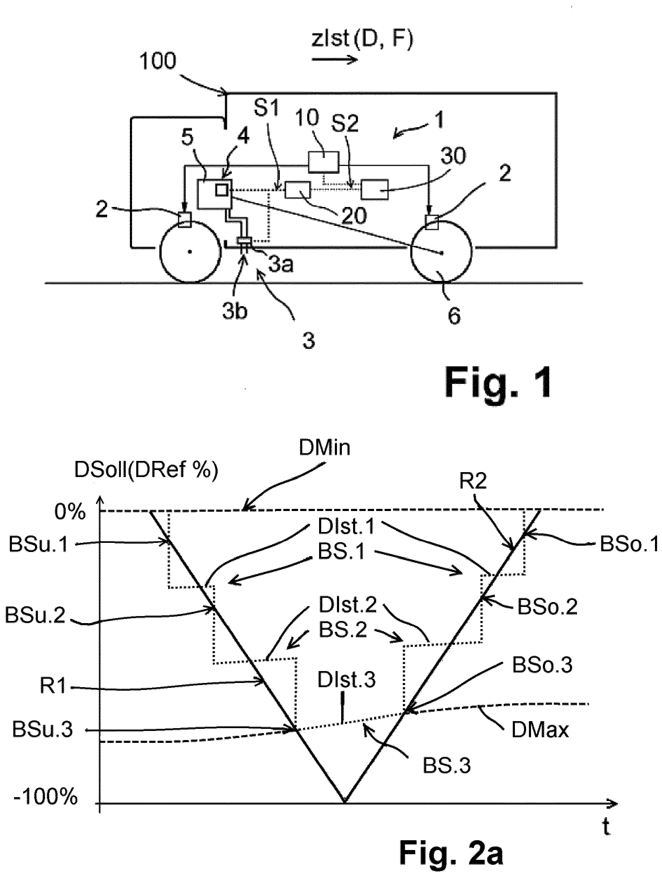

Somit werden Bremsstufen-Schwellwerte sowohl für ein Erhöhen der Verzögerungswirkung als auch für ein Reduzieren der Verzögerungswirkung durch entsprechendes Ansteuern der Dauerbremse angegeben und eingelernt. Dadurch wird die Ein- und Ausschalthysterese der Dauerbremsen berücksichtigt. Demnach wird vermieden, dass die Dauerbremse ständig ein und ausgeschaltet wird bzw. ständig von einer in die andere Bremsstufe hin und her schaltet, wenn die Bremsanforderungs-Sollgröße genau um den jeweiligen Bremsstufen-Schwellwert schwankt. Dies kann durch das Definieren von separaten Bremsstufen-Schwellwerten für das Ein- und das Ausschalten der Dauerbremse vermieden werden. Die Hysterese ist dazu derartig realisiert, dass der Bremsstufen-Deaktivierungs-Schwellwert einer Bremsstufe niedriger liegt, als der Bremsstufen-Aktivierungs-Schwellwert derselben Bremsstufe(vgl. auch Fig. 2a).

Vorzugsweise findet ein Speichern der Bremsanforderungs-Sollgröße als Bremsstufen-Aktivierungs-Schwellenwert einer bestimmten Bremsstufe lediglich dann statt, wenn als ein Bremsstufen-Aktivierungs-Schwellwert für diese Bremsstufe nicht bereits ein Wert gespeichert ist, der kleiner ist als die Bremsanforderungs-Sollgröße bzw. für den bei einem Erhöhen der Fahrzeug-Ist-Verzögerung infolge einer Ansteuerung der Dauerbremse bereits ein früheres Aktivieren der jeweiligen Bremsstufe erfolgt.

Dadurch wird vorteilhafterweise erkannt, dass lediglich der Wert als Bremsstufen-Aktivierungs-Schwellenwert zu speichern ist, der die jeweilige Bremsstufe quasi am frühesten aktiviert. Alle weiteren Bremsanforderungs-Sollgrößen, die im Einlernvorgang für eine bestimmte Bremsstufe ermittelt und ggf. gespeichert sind, können gelöscht bzw. unberücksichtigt bleiben und eine Speicherung dieser Werte kann entfallen.

Selbiges gilt für ein Speichern der Bremsanforderungs-Sollgröße als Bremsstufen-Deaktivierungs-Schwellenwert einer bestimmten Bremsstufe, die lediglich dann stattfindet, wenn als ein Bremsstufen-Deaktivierungs-Schwellwert für diese Bremsstufe nicht bereits ein Wert gespeichert ist, der kleiner ist als die Bremsanforderungs-Sollgröße bzw. für den bei einem Reduzieren der Fahrzeug-Ist-Verzögerung infolge einer Ansteuerung der Dauerbremse ein späteres Deaktivieren derselben Bremsstufe erfolgt.

Vorzugsweise kann auch die Bremswirkungsgrößen-Kennzahl einer jeweiligen Bremsstufe abgespeichert werden, um bei der Ermittlung und Ausgabe der Bremsanforderungs-Sollgröße vorteilhafterweise auch auf das Verhältnis zwischen der Dauerbrems-Ist-Bremswirkungsgröße und der maximalen Dauerbrems-Bremswirkungsgröße einer Bremsstufe zurückgreifen zu können.

Die Erfindung wird im Folgenden anhand der beiliegenden Zeichnungen näher erläutert. Es zeigen:
- Fig. 1: eine schematische Ansicht eines Nutzfahrzeuges mit einem eine Dauerbremse aufweisenden Bremssystem;
- Fig. 2a, 2b: beispielhafte Bremsanforderungen für einen Einlernvorgang und eine Reaktion der Dauerbremse auf diese Bremsanforderungen; und
- Fig. 3: ein Flussdiagramm des erfindungsgemäßen Verfahrens.

Fig. 1 zeigt eine schematische Ansicht eines Nutzfahrzeugs 100, beispielsweise eines Omnibusses oder eines Lastkraftwagens (LKW) mit einem Bremssystem 1, das Betriebsbremsen 2 und zwei Arten von Dauerbremsen 3, 4 aufweist. Demnach ist als eine erste Ausführungsvariante der Dauerbremse eine Motorstaubremse bzw. Auspuffklappenbremse 3 (Exhaust Retarder) vorgesehen, die über eine Stauklappe 3a gezielt ein Auspuffrohr 3b des Nutzfahrzeuges 100 stufenweise öffnen und schließen kann. Weiterhin ist als eine weitere Ausführungsform eine Dekompressionsbremse 4 (Engine Retarder) vorgesehen, die ein gezieltes Belüften der Zylinder eines Motors 5 im Nutzfahrzeug 100 erreichen kann, um eine Motorbremsung herbeizuführen. Der Vollständigkeit halber sind in Fig. 1 beide Arten von Dauerbremsen 3, 4 eingezeichnet. Es kann allerdings auch nur eine der beiden Ausführungsvarianten im Nutzfahrzeug 100 vorgesehen sein.

Beide Dauerbremsen 3, 4 sind in der Lage, durch die angegebenen Maßnahmen, d. h. durch ein Verstellen der Stauklappe 3a oder ein gezieltes Belüften des Motorzylinders im entsprechenden Moment, eine Motordrehzahl des Motors 5 stufenweise zu verringern, wodurch eine Motorbremsung mit einer entsprechend abgestuften Bremswirkungsgröße, die beispielsweise als ein Dauerbrems-Bremsmoment D bzw. eine daraus folgende Dauerbrems-Bremskraft F angegeben wird, herbeigeführt werden kann. Infolge der Motorbremsung kann dann über die angetriebenen Räder 6 des Nutzfahrzeuges 1 für eine entsprechende Abbremsung des Nutzfahrzeuges 1 gesorgt werden, woraufhin sich eine bestimmte Fahrzeug-Ist-Verzögerung zlst einstellt.

Zum Betreiben des Bremssystems 1 ist zum einen ein Betriebsbrems-Steuermodul 10 vorgesehen, das in nicht näher ausgeführter Weise infolge einer beliebigen Bremsanforderung die Betriebsbremsen 2 pneumatisch oder elektrisch gesteuert betätigt, um darüber das Nutzfahrzeug 100 entsprechend zu verzögern. Ein Dauerbrems-Steuermodul 20 gibt entsprechend einer vorliegenden Bremsanforderung ein Steuersignal S1 an die jeweils vorhandene Dauerbremse 3, 4 aus, um in Abhängigkeit davon mit den oben beschriebenen Maßnahmen stufenweise ein gewisses Dauerbrems-Bremsmoment D bzw. eine Dauerbrems-Bremskraft F zu erzeugen und das Nutzfahrzeug 100 im Rahmen einer Motorbremsung abzubremsen. Das Dauerbrems-Steuermodul 20 kann hierbei auch im Betriebsbrems-Steuermodul 10 integriert sein.

Die Einstellung des Dauerbrems-Bremsmomentes D durch die jeweilige Dauerbremse 3, 4 erfolgt erfindungsgemäß über eine Bremsstufen-Anzahl A an Bremsstufen BS.i; mit i = 1, ..., A, in denen jeweils ein anderes diskretes Dauerbrems-Bremsmoment D erzeugt wird. Demnach ist es nicht möglich, dass die jeweilige Dauerbremse 3, 4 zwischen einem minimalen Dauerbrems-Bremsmoment DMin, das in einem passiven Betriebsmodus der Dauerbremse 3, 4 vorliegt und auch als minimale Dauerbrems-Bremskraft FMin angegeben werden kann, und einem maximalen Dauerbrems-Bremsmoment DMax, das bei Aktivierung der Dauerbremse 3, 4 eine maximale mögliche Bremswirkung der Dauerbremse 3, 4 angibt, kontinuierlich Werte des Dauerbrems-Bremsmomentes D erzeugt.

Beispielhaft ist dies in Fig. 2a dargestellt. Demnach ist vorgesehen, die Dauerbremse 3, 4 mit einer Bremsanforderung beispielsweise in Form eines vorgegebenen Dauerbrems-Soll-Bremsmomentes DSoll anzusteuern. Die Bremsanforderung wird in der Darstellung in Fig. 2a als ein prozentuales Bremsmoment angegeben, wobei bei 0% als Dauerbrems-Soll-Bremsmoment DSoll das minimale Dauerbrems-Bremsmoment DMin, d. h. eine minimale Verzögerungswirkung, und bei -100% als Dauerbrems-Soll-Bremsmoment DSoll ein Referenz-Dauerbrems-Bremsmoment DRef der Dauerbremse 3, 4, d. h. eine maximale Verzögerungswirkung der Dauerbremse 3, 4, die auch als eine Referenz-Dauerbrems-Bremskraft FRef angegeben werden kann, erzeugt wird.

Das Referenz-Dauerbrems-Bremsmoment DRef ist hierbei ein Parameter der jeweiligen Dauerbremse 3, 4 und gibt an, was die Dauerbremse 3, 4 maximal imstande ist zu leisten. Wird die Dauerbremse 3, 4 bei maximaler Drehzahl des Motors 5 aktiviert, entspricht das Referenz-Dauerbrems-Bremsmoment DRef zum Zeitpunkt der Aktivierung der Dauerbremse 3, 4 dem maximalen Dauerbrems-Bremsmoment DMax. Da sich die Motordrehzahl infolge der über die Dauerbremse 3, 4 eingeleiteten Motorbremsung allerdings verringert, verändert sich auch das maximale Dauerbrems-Bremsmoment DMax der Dauerbremse 3, 4, während das Referenz-Dauerbrems-Bremsmoment DRef immer gleichbleibt. Deshalb wird die Bremsanforderung immer prozentual bezüglich dem Referenz-Dauerbrems-Bremsmoment DRef angegeben.

Beispielhaft ist dies in Fig. 2a dargestellt, wonach der Motor 5 zu Beginn der Bremsung nicht auf voller Motordrehzahl läuft, so dass die Dauerbremse 3, 4 zum Zeitpunkt der Aktivierung lediglich ca. 80% des maximal möglichen Referenz-Dauerbrems-Bremsmomentes DRef erzeugen kann, d. h. das maximale Dauerbrems-Bremsmoment DMax zu diesem Zeitpunkt entspricht ca. 0,8 mal dem Referenz-Dauerbrems-Bremsmoment DRef.

Die Bremsanforderung in Fig. 2a verläuft über die Zeit t zunächst entlang einer kontinuierlich abfallenden Rampe R1 zwischen 0% und -100%, mit der ein kontinuierliches Erhöhen der Fahrzeug-Ist-Verzögerung zlst über die Zeit t, d.h. ein stärkeres Abbremsen, angefordert wird, und anschließend entlang einer kontinuierlich ansteigenden Rampe R2 zwischen -100% und 0%, mit der ein kontinuierliches Reduzieren der Fahrzeug-Ist-Verzögerung zlst über die Zeit t, d.h. ein weniger starkes Abbremsen, angefordert wird.

Die Reaktion der Dauerbremse 3, 4 auf diese Bremsanforderung wird in Fig. 2a über von der Dauerbremse 3, 4 erzeugte Dauerbrems-Ist-Bremsmomente Dlst.i; mit i = 1, ..., A, angegeben. Da die Dauerbremse 3, 4 in Bremsstufen BS.i betrieben wird, werden von der Dauerbremse 3, 4 trotz der kontinuierlich verlaufenden Bremsanforderung in der jeweiligen Fahrsituation lediglich diskrete Dauerbrems-Ist-Bremsmomente Dlst.i erzeugt, die jeweils einer Bremsstufe BS.i zugeordnet sind. In Fig. 2a ist beispielhaft eine Bremsstufen-Anzahl A von drei vorgesehen, d.h. zwischen dem minimalen Dauerbrems-Bremsmoment DMin und dem maximalen Dauerbrems-Bremsmoment DMax im Betrieb der Dauerbremse 3, 4 sind drei Bremsstufen BS.i; mit i = 1, 2, 3; vorgesehen. Es können aber auch mehr oder weniger als drei Bremsstufen BS.i vorgesehen sein.

Das der jeweiligen Bremsstufe BS.i zugeordnete Dauerbrems-Ist-Bremsmoment Dlst.i ist gemäß dieser Ausführungsform in gleichen Abständen zwischen dem minimalen Dauerbrems-Bremsmoment DMin und dem gerade vorliegenden maximalen Dauerbrems-Bremsmoment DMax verteilt. D. h. in einer ersten Bremsstufe BS.1 wird ein erstes Dauerbrems-Ist-Bremsmoment Dlst.1 von einem Drittel des maximalen Dauerbrems-Bremsmomentes DMax erzeugt. Entsprechend in einer zweiten Bremsstufe BS.2 zwei Drittel des maximalen Dauerbrems-Bremsmomentes DMax und in einer dritten Bremsstufe BS.3 das maximale Dauerbrems-Bremsmoment DMax.

Da wie bereits beschrieben, das maximale Dauerbrems-Bremsmoment DMax abhängig von der aktuellen Motordrehzahl ist, die sich infolge der Motorbremsung verringert, fallen aufgrund ihrer Abhängigkeit auch die Dauerbrems-Ist-Bremsmomente Dlst.i in den einzelnen Bremsstufen BS.i mit zunehmender Zeit t leicht ab.

Zum Aktivieren der jeweiligen Bremsstufe BS.i und somit zum Aussteuern bzw. Erzeugen des entsprechenden Dauerbrems-Ist-Bremsmomentes Dlst.i sind Bremsstufen-Aktivierungs-Schwellwerte BSu.i und Bremsstufen-Deaktivierungs-Schwellwerte BSo.i vorgesehen, die jeder Bremsstufe BS.i eindeutig zugeordnet sind. Der jeweilige Bremsstufen-Aktivierungs-Schwellwert BSu.i einer Bremsstufe BS.i gibt hierbei an, ab wann bei einem Erhöhen der Verzögerungswirkung der Dauerbremse 3, 4, d. h. in Fig. 2a im Verlauf der abfallenden Rampe R1, in die jeweilige Bremsstufe BS.i umgeschaltet wird. Der Bremsstufen-Deaktivierungs-Schwellenwert BSu.i einer Bremsstufe BS.i hingegen gibt an, ab wann bei einem Reduzieren der Verzögerungswirkung der Dauerbremse 3, 4, d.h. in Fig. 2a im Verlauf der ansteigenden Rampe R2, die jeweilige Bremsstufe BS.i deaktiviert und eine entsprechend niedrigere Bremsstufe BS.i aktiviert wird.

Demnach wird bei Abfahren der abfallenden Rampe R1 und bei Erreichen einer Bremsanforderung, die einem ersten Bremsstufen-Aktivierungs-Schwellwert BSu.1 von ca. 10% des Referenz-Dauerbrems-Bremsmomentes DRef entspricht, von einem passiven Betriebsmodus in die erste Bremsstufe BS.1 umgeschaltet, d. h. durch die Dauerbremse 3, 4 wird ein erstes Dauerbrems-Ist-Bremsmoment Dlst.1 erzeugt, das 33% des maximalen Dauerbrems-Bremsmomentes DMax entspricht. Bis über die abfallenden Rampe R1 ein Dauerbrems-Soll-Bremsmoment DSoll angefordert wird, das diesem ersten Dauerbrems-Ist-Bremsmoment Dlst.1 entspricht, ist das Nutzfahrzeug 100 überbremst. Wird dieser Wert durch ein angefordertes Dauerbrems-Soll-Bremsmoment DSoll erreicht und überschritten, ist das Nutzfahrzeug 100 für den folgenden Verlauf der abfallenden Rampe R1 unterbremst, bis in die zweite Bremsstufe BS.2 umgeschaltet wird. Dies erfolgt, sobald über die abfallenden Rampe R1 ein zweiter Bremsstufen-Aktivierungs-Schwellwert BSu.2 von ca. 33% des Referenz-Dauerbrems-Bremsmomentes DRef erreicht wird. Ab diesem Zeitpunkt t erzeugt die Dauerbremse 3, 4 ein zweites Dauerbrems-Ist-Bremsmoment Dlst.2 von 66% des maximalen Dauerbrems-Bremsmomentes DMax und das Nutzfahrzeug 100 ist demnach zunächst wieder überbremst, bis das Dauerbrems-Soll-Bremsmoment DSoll auf der abfallenden Rampe R1 auf denselben Wert abgefallen ist. In die dritte Bremsstufe BS.3 wird entsprechend bei einem dritten Bremsstufen-Aktivierungs-Schwellwert BSu.3 von ca. 75% des Referenz-Dauerbrems-Bremsmomentes DRef umgeschaltet, in der als drittes Dauerbrems-Ist-Bremsmoment Dlst.3 das maximale Dauerbrems-Bremsmoment DMax für die aktuell vorliegende Motordrehzahl erzeugt wird.

Für die ansteigende Rampe R2 bei Reduzierung der Verzögerungswirkung ist der Bremsstufen-Deaktivierungs-Schwellwert BSo.i einschlägig, der angibt, ab wann die entsprechende Bremsstufe BS.i, die gerade aktiviert ist, deaktiviert wird und in eine niedrigere Bremsstufe BS.i umgeschaltet wird. Nimmt demnach die ansteigende Rampe R2 einen dritten Bremsstufen-Deaktivierungs-Schwellenwert BSo.3 von ca. 70% des Referenz-Dauerbrems-Bremsmomentes DRef an, wird die dritte Bremsstufe BS.3, die gerade aktiviert ist, deaktiviert und es wird stattdessen die zweite Bremsstufe BS.2 aktiviert, in der wieder das zweite Dauerbrems-Ist-Bremsmoment Dlst.2 von 66% des maximalen Dauerbrems-Bremsmomentes DMax erzeugt wird. Bei einem zweiten Bremsstufen-Deaktivierungs-Schwellwert BSo.2 von ca. 30% des Referenz-Dauerbrems-Bremsmomentes DRef wird entsprechend die zweite Bremsstufe BS.2 deaktiviert und in die erste Bremsstufe BS.1 umgeschaltet. Bei einem ersten Bremsstufen-Deaktivierungs-Schwellwert BSo.1 von 8% des Referenz-Dauerbrems-Bremsmomentes DRef wird in den passiven Betriebsmodus der Dauerbremse 3, 4 umgeschaltet.

Somit kann über diese Werte unter Kenntnis des Referenz-Dauerbrems-Bremsmomentes DRef eine eindeutige Zuordnung zwischen der kontinuierlich verlaufenden Bremsanforderung und den diskreten Bremsstufen BS.i erfolgen. Um also eine entsprechende Verzögerungswirkung durch die Dauerbremse 3, 4 zu erreichen, sind diese Werte von der entsprechenden die Verzögerung anfordernden Einrichtung zu ermitteln bzw. zu erlernen, worauf später näher eingegangen wird.

Die kontinuierlich verlaufende Bremsanforderung an das Dauerbrems-Steuermodul 20 kann hierbei unabhängig von der Art der angesteuerten Dauerbremse 3, 4 von einem Assistenz-Steuermodul 30 vorgegeben werden, das ausgebildet ist, das Nutzfahrzeug 100 in Abhängigkeit von vorgegebenen Parametern automatisiert abzubremsen, z. B. im Rahmen einer adaptiven Geschwindigkeitsregelung (ACC), einer Fahrdynamikregelung (ESP) oder eines Tempomaten (CC).

Dazu gibt das Assistenz-Steuermodul 30 in der entsprechenden Situation, in der ein Abbremsen des Nutzfahrzeuges 100 über die jeweilige Dauerbremse 3, 4 erfolgen soll, über ein Dauerbrems-Bremssignal S2 eine Bremsanforderungs-Sollgröße zSoll, DSoll, FSoll vor, die die Verzögerung charakterisiert, die durch Ansteuerung der jeweiligen Dauerbremse 3, 4 umgesetzt werden soll. Die Bremsanforderungs-Sollgröße kann hierbei beispielsweise durch eine Fahrzeug-Soll-Verzögerung zSoll, das Dauerbrems-Soll-Bremsmoment DSoll, eine daraus folgende Dauerbrems-Soll-Bremskraft FSoll oder eine beliebige andere damit zusammenhängende Sollgröße gegeben sein.

Gemäß dieser Ausführung wird die jeweilige Bremsanforderungs-Sollgröße zSoll, DSoll, FSoll über das Dauerbrems-Bremssignal S2 von dem Assistenz-Steuermodul 30 direkt an das Dauerbrems-Steuermodul 20 übermittelt. Alternativ kann das Dauerbrems-Bremssignal S2 aber auch von dem Betriebsbrems-Steuermodul 10 an das ggf. auch integrierte Dauerbrems-Steuermodul 20 weitergegeben werden, wenn beispielsweise eine Vorverarbeitung und Verteilung einer automatisiert vorgegebenen Bremsanforderung des Assistenz-Steuermoduls 30 auf die Betriebsbremsen 2 und die Dauerbremsen 3, 4 erfolgen soll.

Um gesteuert durch das Assistenz-Steuermodul 30 in Abhängigkeit des Dauerbrems-Bremssignals S2 bzw. der jeweiligen Bremsanforderungs-Sollgröße zSoll, DSoll, FSoll ein für die jeweilige Bremssituation optimales Dauerbrems-Ist-Bremsmoment Dlst.i durch die Dauerbremse 3, 4 einzustellen, ist ein Einlernvorgang vorgesehen. In diesem Einlernvorgang wird von dem Assistenz-Steuermodul 30 ermittelt, wann eine entsprechende Aktivierung bzw. Deaktivierung der Bremsstufen BS.i erfolgt. Dies ist erforderlich, da dem Assistenz-Steuermodul 30 die genauen Parameter der einzelnen Bremsstufen BS.i, d.h. insbesondere die Bremsstufen-Anzahl A sowie die Bremsstufen-Schwellwerte BSu.i, BSo.i, im Normalfall nicht bekannt sind. Daher kann unter Berücksichtigung der Überbremsphasen und Unterbremsphasen in einer Bremsstufe BS.i in der entsprechenden Situation, in der ein Abbremsen des Nutzfahrzeuges 100 über die jeweilige Dauerbremse 3, 4 erfolgen soll, nicht zuverlässig entschieden werden, ab wann in die entsprechende Bremsstufe BS.i umgeschaltet werden könnte bzw. sollte.

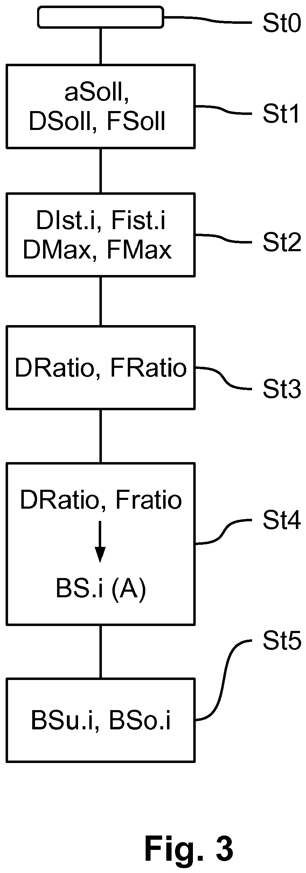

Für den Einlernvorgang ist gemäß Fig. 3 in einem ersten Schritt St1 nach der Initialisierung des Assistenz-Steuermoduls 30 in einem anfänglichen Schritt St0 zunächst vorgesehen, die aktuell vorliegende Bremsanforderungs-Sollgröße zSoll, DSoll, FSoll zu ermitteln, die von dem Assistenz-Steuermodul 30 vorgegeben wird. Diese Bremsanforderungs-Sollgröße zSoll, DSoll, FSoll wird anschließend über das Dauerbrems-Bremssignal S2 an das Dauerbrems-Steuermodul 20 übermittelt, um mit der Dauerbremse 3, 4 eine gewisse Verzögerungswirkung zu erreichen. Da das Assistenz-Steuermodul 30 zu diesem Zeitpunkt noch keine Kenntnis von der Bremsstufen-Anzahl A und den Bremsstufen-Schwellenwerte BSu.i, BSo.i hat, ist zunächst unbekannt, wie stark das Nutzfahrzeug 100 auf die Bremsanforderungs-Sollgröße zSoll, DSoll, FSoll reagieren wird.

In einem zweiten Schritt St2 ist anschließend vorgesehen, eine aktuelle Dauerbrems-Ist-Bremswirkungsgröße Dlst.i, Flst.i zu ermitteln, die angibt, welche Bremswirkungsgröße D, F von der Dauerbremse 3, 4 infolge der Ansteuerung der Dauerbremse 3, 4 mit der Bremsanforderungs-Sollgröße zSoll, DSoll, FSoll erzeugt wird. Die Dauerbrems-Ist-Bremswirkungsgröße kann hierbei das Dauerbrems-Ist-Bremsmoment Dlst.i oder aber auch eine Dauerbrems-Ist-Bremskraft Flst.i sein, die somit angibt, welches Bremsmoment D bzw. welche damit zusammenhängende Bremskraft F als charakteristische Bremswirkungsgröße gerade erzeugt wird. Hierbei ist - wie bereits oben beschrieben - zu erwarten, dass die Dauerbrems-Ist-Bremswirkungsgröße Dlst.i, Flst.i je nach Bremsstufen-Anzahl A nur diskrete Werte annimmt.

Um nun zu ermitteln, welcher Bremsstufe BS.i die ermittelte Dauerbrems-Ist-Bremswirkungsgröße Dist.i, Flst.i zugeordnet ist, wird weiterhin eine aktuell vorliegende maximale Dauerbrems-Bremswirkungsgröße erfasst, d.h. das maximale Dauerbrems-Bremsmoment DMax bzw. eine maximale Dauerbrems-Bremskraft FMax, die wie oben beschrieben die unter Berücksichtigung der aktuellen Motordrehzahl maximal erzeugbare Bremswirkungsgröße D, F angibt.

Die Dauerbrems-Ist-Bremswirkungsgröße Dlst.i, Flst.i sowie die maximale Dauerbrems-Bremswirkungsgröße DMax, FMax werden hierbei vom Dauerbrems-Steuermodul 20 selbst bereitgestellt, so dass auf diese im Rahmen des Einlernvorgangs in einfacher Weise zurückgegriffen werden kann.

Aus der jeweiligen Dauerbrems-Ist-Bremswirkungsgröße Dlst.i, Flst.i und der maximalen Dauerbrems-Bremswirkungsgröße DMax, FMax wird anschließend in einem dritten Schritt St3 eine Bremswirkungsgrößen-Kennzahl, d. h. eine Bremsmoment-Kennzahl DRatio oder ein Bremskraft-Kennzahl FRatio ermittelt, die einen Unterschied bzw. ein Verhältnis zwischen der jeweiligen Dauerbrems-Ist-Bremswirkungsgröße Dist.i, Flst.i und der maximalen Dauerbrems-Bremswirkungsgröße DMax, FMax charakterisiert.

In einem vierten Schritt St4 wird die ermittelte Bremswirkungsgrößen-Kennzahl DRatio, FRatio dann einer Bremsstufe BS.i der Dauerbremse 3, 4 derartig zugeordnet, dass jeder Bremsstufe BS.i lediglich eine Bremswirkungsgrößen-Kennzahl DRatio, FRatio zugeordnet ist.

Ist demnach zu Beginn des Einlernvorganges noch nichts bekannt und werden infolge einer Bremsanforderung ein Dauerbrems-Ist-Bremsmoment Dlst.i und ein maximales Dauerbrems-Bremsmoment DMax ermittelt, die zu einer Bremsmoment-Kennzahl DRatio von DRatio = Dlst.i / DMax = 2/3 führen, so wird dieser Wert "2/3" zunächst einer gewissen Bremsstufe BS.i zugeordnet, der noch keine derartige Bremsmoment-Kennzahl DRatio von "2/3" zugeordnet ist. Ist dies die erste ermittelte Bremsmoment-Kennzahl DRatio so folgt aus dem Einlernvorgang also zunächst, dass lediglich eine Bremsstufe BS.i vorhanden ist, da keine weiteren Informationen vorliegen. Zudem geht aus dieser Zuordnung hervor, dass in dieser Bremsstufe BS.i ein Dauerbrems-Ist-Bremsmoment Dlst.i von 2/3 des maximalen Dauerbrems-Bremsmomentes DMax erzeugt werden.

Wurde in einem vorherigen Einlernvorgang bereits eine Bremsmoment-Kennzahl DRatio von beispielsweise "1/3" ermittelt und einer bestimmten Bremsstufe BS.i zugeordnet, so wird die aus diesem Einlernvorgang folgende Bremsmoment-Kennzahl DRatio von "2/3" einer weiteren Bremsstufe BS.i zugeordnet und aus dem Einlernvorgang folgt, dass mindestens zwei Bremsstufen BS.i vorhanden sind.

D. h. durch wiederholtes Ermitteln der jeweiligen Bremswirkungsgrößen-Kennzahl DRatio, FRatio kann festgestellt werden, wie viele Bremsstufen BS.i vorhanden sind, da eine Anzahl NK an unterschiedlichen Bremswirkungsgrößen-Kennzahlen DRatio, FRatio die Bremsstufen-Anzahl A angibt, wobei dies in besonderes effektiver Weise möglich ist, wenn die Bremsanforderung wie in Fig. 2a dargestellt mit einer abfallenden und/oder ansteigenden Rampe R1, R2 vorgegeben wird und die Bremswirkungsgrößen-Kennzahl DRatio, FRatio in geringen Abständen ermittelt wird. Auf diese Weise kann auch festgestellt werden, welcher Anteil des maximalen Dauerbrems-Bremsmomentes DMax in der jeweiligen Bremsstufe BS.i erzeugt werden. Da ein derartiger Einlernvorgang mit kontinuierlich verlaufenden Rampen R1, R2 gemäß Fig. 2a im normalen Fahrbetrieb zu einer nicht beabsichtigten und ggf. unkontrollierten Bremsung führen würde und daher nicht umsetzbar ist, kann ein derartiges Vorgehen beispielsweise am Bandende (EOL) beim Hersteller vorgesehen sein.

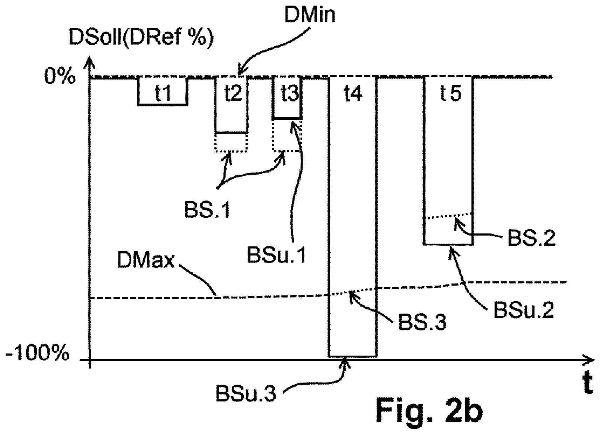

Im laufenden Fahrbetrieb hingegen werden lediglich zeitweise diskrete Werte für die Bremsanforderungs-Sollgrößen zSoll, DSoll, FSoll durch das Assistenz-Steuermodul 30 vorgegeben, so dass die Zeit, bis alle Bremsstufen BS.i sowie Bremswirkungsgrößen-Kennzahlen DRatio, FRatio identifiziert sind, abhängig davon ist, wie oft und mit wie vielen unterschiedlichen Bremsanforderungs-Sollgrößen zSoll, DSoll, FSoll die jeweilige Dauerbremse 3, 4 vom Assistenz-Steuermodul 30 während der Fahrt angesteuert wird. Beispielhaft ist dies in Fig. 2b für einen alternativen Einlernvorgang beschrieben. Demnach liegt zu einem ersten Zeitpunkt t1 eine Bremsanforderungs-Sollgröße zSoll, DSoll, FSoll vor, die ca. -10% des Referenz-Dauerbrems-Bremsmomentes DRef entspricht. Da der - bisher noch unbekannte - erste Bremsstufen-Aktivierungs-Schwellenwert BSu.1 durch diese Bremsanforderungs-Sollgröße zSoll, DSoll, FSoll noch nicht überschritten wurde, was dadurch festgestellt wird, dass sich keine Veränderung in der Dauerbrems-Ist-Bremswirkungsgröße Dlst.i, Flst.i ergibt, kann dieser Bremsanforderungs-Sollgröße zSoll, DSoll, FSoll nichts zugeordnet werden.

Zu einem zweiten Zeitpunkt t2 erfolgt die Vorgabe einer Bremsanforderungs-Sollgröße zSoll, DSoll, FSoll, die -20% des Referenz-Dauerbrems-Bremsmomentes DRef entspricht. Bei dieser Bremsanforderungs-Sollgröße zSoll, DSoll, FSoll wird der erste Bremsstufen-Aktivierungs-Schwellenwert BSu.1 überschritten, was dadurch festgestellt wird, dass die Dauerbrems-Ist-Bremswirkungsgröße Dlst.i, Flst.i mit ca. -24% anspricht bzw. eine Bremsmoment-Kennzahl DRatio von beispielsweise "1/3" vorliegt. Als erster Bremsstufen-Aktivierungs-Schwellenwert BSu.1 wird demnach vorerst -20% DRef gespeichert. Zu einem dritten Zeitpunkt t3 erfolgt die Vorgabe einer Bremsanforderungs-Sollgröße zSoll, DSoll, FSoll, die -15% des Referenz-Dauerbrems-Bremsmomentes DRef entspricht. Bei dieser Bremsanforderungs-Sollgröße zSoll, DSoll, FSoll wird der erste Bremsstufen-Aktivierungs-Schwellenwert BSu.1 ebenfalls überschritten, was dadurch festgestellt wird, dass die Dauerbrems-Ist-Bremswirkungsgröße Dlst.i, Flst.i mit weniger als - 24% anspricht bzw. eine Bremsmoment-Kennzahl DRatio von ebenfalls "1/3" vorliegt. D. h. bei dieser Bremsung kommt die Bremsanforderungs-Sollgröße zSoll, DSoll, FSoll von -15% des Referenz-Dauerbrems-Bremsmomentes DRef dem ersten Bremsstufen-Aktivierungs-Schwellwert BSu.1 näher, so dass dieser Wert als neuer erster Bremsstufen-Aktivierungs-Schwellwert BSu.1 für die erste Bremsstufe BS.1 gespeichert wird.

Vergleichbares gilt für den vierten Zeitpunkt t4, bei dem für -100% des Referenz-Dauerbrems-Bremsmomentes DRef eine weitere Bremsstufe BS.i bzw. ein weiterer Bremsstufen-Aktivierungs-Schwellwert BSu.i gelernt wird, für den eine Bremsmoment-Kennzahl DRatio von beispielsweise "3/3" festgestellt wird. Zu diesem Zeitpunkt ist die tatsächliche Anzahl A an Bremsstufen BS.i noch unbekannt, so dass diese -100% des Referenz-Dauerbrems-Bremsmomentes DRef vorerst einer zweiten Bremsstufe BS.2 zugeordnet wird. Zu einem fünften Zeitpunkt t5 wird für -60% des Referenz-Dauerbrems-Bremsmomentes DRef eine weitere Bremsstufe BS.i bzw. ein weiterer Bremsstufen-Aktivierungs-Schwellwert BSu.i gelernt, für den eine Bremsmoment-Kennzahl DRatio von beispielsweise "2/3" festgestellt wird. Daraus kann darauf geschlussfolgert werden, dass drei Bremsstufen BS.i vorhanden sind, wobei der zweiten Bremsstufe BS.2 -60% des Referenz-Dauerbrems-Bremsmomentes DRef als zweiter Bremsstufen-Aktivierungs-Schwellwert BSu.2 zugeordnet wird und der dritten Bremsstufe BS.3 als dritter Bremsstufen-Aktivierungs-Schwellwert BSu.3 die zum vierten Zeitpunkt t4 eingestellten -100% des Referenz-Dauerbrems-Bremsmomentes DRef. Somit findet eine Sortierung der Bremsstufen BS.i statt.

Um nun zusätzlich auch die Bremsstufen-Schwellenwerte BSu.i, BSo.i für diese Bremsstufen BS.i zu ermitteln, ist in einem fünften Schritt St5 vorgesehen, die Bremsanforderungs-Sollgröße zSoll, DSoll, FSoll, infolge derer sich die Bremswirkungsgrößen-Kennzahl DRatio, FRatio der jeweils zugeordneten Bremsstufe BS.i ergibt, zu speichern. Die Bremsanforderungs-Sollgröße zSoll, DSoll, FSoll wird hierbei als Bremsstufen-Aktivierungs-Schwellwert BSu.i abgespeichert, wenn über die Bremsanforderungs-Sollgröße zSoll, DSoll, FSoll ein Erhöhen der Verzögerungswirkung angefordert wird, z.B. gemäß der abfallenden Rampe R1 in Fig. 2a, und als ein Bremsstufen-Deaktivierungs-Schwellwert BSo.i, wenn ein Reduzieren der Verzögerungsanforderung angefordert wird, z.B. gemäß der ansteigenden Rampe R2 in Fig. 2a.

Vorzugsweise erfolgt eine derartige Speicherung der Bremsanforderungs-Sollgröße zSoll, DSoll, FSoll als Bremsstufen-Schwellwert BSu.i, BSo.i für die gerade einschlägige Bremsstufe BS.i jedoch nur, wenn nicht bereits zu einem vorherigen Zeitpunkt in einem derartigen Einlernvorgang ein Wert für den Bremsstufen-Schwellwert BSu.i, BSo.i für diese Bremsstufe BS.i gespeichert wurde, der näher am tatsächlichen Bremsstufen-Schwellwert BSu.i, BSo.i liegt und demnach bereits früher für eine Aktivierung bzw. Deaktivierung sorgt. Demnach nähert sich bei der Durchführung von mehreren Einlernvorgängen der gespeicherte Wert immer mehr an den tatsächlichen Wert des jeweiligen Bremsstufen-Schwellwertes BSu.i, BSo.i an.

Somit können in mehreren Schritten, die vorzugsweise auf dem Assistenz-Steuermodul 30 durchgeführt werden, sowohl die Bremsstufen-Anzahl A als auch die Werte der Bremsstufen-Schwellwerte BSu.i, BSo.i der jeweiligen Bremsstufen BS.i ermittelt und abgespeichert werden. Mit diesen Werten kann dann von dem Assistenz-Steuermodul 30 eine optimierte Ansteuerung der jeweiligen Dauerbremse 3, 4 erfolgen, indem z.B. bereits früher in die nächsthöhere Bremsstufe BS.i umgeschaltet wird, um unter Kenntnis der Dauerbrems-Ist-Bremswirkungsgröße Dlst.i, Flst.i in der jeweiligen Bremsstufe BS.i ggf. Überbremsphasen und Unterbremsphasen in geeigneter Weise auszunutzen, statt auf die zusätzliche Ansteuerung von verschleißbehafteten Betriebsbremsen 2 zurückzugreifen.

### Bezugszeichenliste (Teil der Beschreibung)

- 1: Bremssystem
- 2: Betriebsbremsen
- 3: Motorstaubremse/Auspuffklappenbremse
- 3a: Stauklappe
- 3b: Auspuffrohr
- 4: Dekompressionsbremse
- 5: Motor
- 6: angetriebene Räder
- 10: Betriebsbrems-Steuermodul
- 20: Dauerbrems-Steuermodul
- 30: Assistenz-Steuermodul
- 100: Nutzfahrzeug
- A: Bremsstufen-Anzahl
- BS.i: Bremsstufen
- BSo.i: Bremsstufen-Aktivierungs-Schwellenwert
- BSu.i: Bremsstufen-Deaktivierungs-Schwellenwert
- D: Dauerbrems-Bremsmoment
- Dlst.i: Dauerbrems-Ist-Bremsmoment
- DMax: maximales Dauerbrems-Bremsmoment
- DMin: minimales Dauerbrems-Bremsmoment
- DRatio: Bremsmoment-Kennzahl
- DRef: Referenz-Dauerbrems-Bremsmoment
- DSoll: Dauerbrems-Soll-Bremsmoment
- F: Bremskraft
- Flst.i: Dauerbrems-Ist-Bremskraft
- FMax: maximale Dauerbrems-Bremskraft
- FMin: minimale Dauerbrems-Bremskraft
- FSoll: Dauerbrems-Soll-Bremskraft
- FRatio: Bremskraft-Kennzahl
- FRef: Referenz-Dauerbrems-Bremskraft
- i: Index
- NK: Anzahl
- R1: abfallende Rampe
- R2: ansteigende Rampe
- S1: Steuersignal
- S2: Dauerbrems-Bremssignal
- t: Zeit
- t1: erster Zeitpunkt
- t2: zweiter Zeitpunkt
- t3: dritter Zeitpunkt
- t4: vierter Zeitpunkt
- t5: fünfter Zeitpunkt
- zlst: Fahrzeug-Ist-Verzögerung
- zSoll: Fahrzeug-Soll-Verzögerung
- St1, St2, St3, St4, St5: Schritte des Verfahrens

## Patentansprüche

1. Verfahren zum Einlernen von Bremsstufen-Schwellwerten (BSo.i, BSu.i) einer in Bremsstufen (BS.i) geschalteten Dauerbremse (3,4) in einem Nutzfahrzeug (1), mit mindestens den folgenden Schritten:
- Erfassen einer Bremsanforderungs-Sollgröße (zSoll, DSoll, FSoll) und Ansteuern der Dauerbremse (3, 4) mit der erfassten Bremsanforderungs-Sollgröße (zSoll, DSoll, FSoll) zum Erhöhen oder zum Reduzieren einer Fahrzeug-Ist-Verzögerung (zlst) des Nutzfahrzeuges (1) durch Einstellen einer Bremswirkungsgröße (D, F) der Dauerbremse (3, 4) (St1);
- Erfassen einer Dauerbrems-Ist-Bremswirkungsgröße (Dlst.i, Fist.i) und einer maximalen Dauerbrems-Bremswirkungsgröße (DMax, FMax), wobei die Dauerbrems-Ist-Bremswirkungsgröße (Dlst.i, Fist.i) die von der Dauerbremse (3, 4) infolge der Ansteuerung mit der Bremsanforderungs-Sollgröße (zSoll, DSoll, FSoll) erzeugte Bremswirkungsgröße (D, F) charakterisiert, und die maximale Dauerbrems-Bremswirkungsgröße (DMax, FMax) charakterisiert, welche Bremswirkungsgröße (D, F) von der Dauerbremse (3, 4) während einer Ansteuerung der Dauerbremse (3, 4) mit der Bremsanforderungs-Sollgröße (zSoll, DSoll, FSoll) maximal erzeugt werden kann (St2);
- Bilden einer Bremswirkungsgrößen-Kennzahl (DRatio, FRatio), wobei die Bremswirkungsgrößen-Kennzahl (DRatio, FRatio) ein Verhältnis aus der Dauerbrems-Ist-Bremswirkungsgröße (Dlst.i, Fist.i) und der maximalen Dauerbrems-Bremswirkungsgröße (DMax, FMax) charakterisiert, das sich infolge der Ansteuerung der Dauerbremse (3, 4) mit der Bremsanforderungs-Sollgröße (zSoll, DSoll, FSoll) ergibt (St3);
- Zuordnen der Bremswirkungsgrößen-Kennzahl (DRatio, FRatio) zu einer Bremsstufe (BS.i) der Dauerbremse (3, 4) derartig, dass jeder Bremsstufe (BS.i) lediglich eine Bremswirkungsgrößen-Kennzahl (DRatio, FRatio) zugeordnet wird (St4); und
- Speichern der Bremsanforderungs-Sollgröße (zSoll, DSoll, FSoll), infolge derer sich die Bremswirkungsgrößen-Kennzahl (DRatio, FRatio) ergibt, als Bremsstufen-Schwellenwert (BSu.i, BSo.i) derjenigen Bremsstufe (BS.i), der die Bremswirkungsgrößen-Kennzahl (DRatio, FRatio) zugeordnet ist, wobei der Bremsstufen-Schwellwert (BSu.i, BSo.i) angibt, bei welcher Bremsanforderungs-Sollgröße (zSoll, DSoll, FSoll) die jeweilige Bremsstufe (BS.i) aktiviert oder deaktiviert wird.

2. Verfahren nach Anspruch 1, **dadurch gekennzeichnet, dass** ein Bremsstufen-Aktivierungs-Schwellwert (BSu.i) angibt, ab welchen Werten der Bremsanforderungs-Sollgröße (zSoll, DSoll, FSoll) bei einem Erhöhen der Fahrzeug-Ist-Verzögerung (zlst) infolge der Ansteuerung mit dieser Bremsanforderungs-Sollgröße (zSoll, DSoll, FSoll) die jeweilige Bremsstufe (BS.i) aktiviert wird und ein Bremsstufen-Deaktivierungs-Schwellwert (BSo.i) angibt, ab welchen Werten der Bremsanforderungs-Sollgröße (zSoll, DSoll, FSoll) bei einem Reduzieren der Fahrzeug-Ist-Verzögerung (zlst) infolge der Ansteuerung mit dieser Bremsanforderungs-Sollgröße (zSoll, DSoll, FSoll) die jeweilige Bremsstufe (BS.i) deaktiviert wird.

3. Verfahren nach Anspruch 2, **dadurch gekennzeichnet, dass** der einer Bremsstufe (BS.i) zugeordnete Bremsstufen-Aktivierungs-Schwellwert (BSu.i) ungleich dem derselben Bremsstufe (BS.i) zugeordneten Bremsstufen-Deaktivierungs-Schwellwert (BSo.i) ist.

4. Verfahren nach Anspruch 2 oder 3, **dadurch gekennzeichnet, dass** ein Speichern der Bremsanforderungs-Sollgröße (zSoll, DSoll, FSoll) als Bremsstufen-Aktivierungs-Schwellenwert (BSu.i) einer bestimmten Bremsstufe (BS.i) lediglich dann stattfindet, wenn für diese Bremsstufe (BS.i) nicht bereits ein Bremsstufen-Aktivierungs-Schwellwert (BSu.i) gespeichert ist,
- der kleiner ist als die Bremsanforderungs-Sollgröße (zSoll, DSoll, FSoll), und/oder
- für den bei einem Erhöhen der Fahrzeug-Ist-Verzögerung (zlst) infolge einer Ansteuerung der Dauerbremse (3, 4) mit diesem gespeicherten Bremsstufen-Aktivierungs-Schwellenwert (BSu.i) bereits ein früheres Aktivieren der jeweiligen Bremsstufe (BS.i) erfolgt.

5. Verfahren nach einem der Ansprüche 2 bis 4, **dadurch gekennzeichnet, dass** ein Speichern der Bremsanforderungs-Sollgröße (zSoll, DSoll, FSoll) als Bremsstufen-Deaktivierungs-Schwellenwert (BSo.i) einer bestimmten Bremsstufe (BS.i) lediglich dann stattfindet, wenn für diese Bremsstufe (BS.i) nicht bereits ein Bremsstufen-Deaktivierungs-Schwellwert (BSo.i) gespeichert ist,
- der kleiner ist als die Bremsanforderungs-Sollgröße (zSoll, DSoll, FSoll), und/oder
- für den bei einem Reduzieren der Fahrzeug-Ist-Verzögerung (zlst) infolge einer Ansteuerung der Dauerbremse (3, 4) mit diesem gespeicherten Bremsstufen-Deaktivierungs-Schwellenwert (BSu.i) ein späteres Deaktivieren derselben Bremsstufe (BS.i) erfolgt.

6. Verfahren nach einem der Ansprüche 2 bis 5, **dadurch gekennzeichnet, dass** auf ein Aktivieren einer höheren Bremsstufe (BS.i), in der eine höhere Dauerbrems-Ist-Bremswirkungsgröße (Dlst.i, Flst.i) erzeugt wird, geschlossen wird, wenn sich die Bremswirkungsgrößen-Kennzahl (DRatio, FRatio) infolge einer Ansteuerung der Dauerbremse (3, 4) mit einer bestimmten Bremsanforderungs-Sollgröße (zSoll, DSoll, FSoll) erhöht, und dass auf ein Deaktivieren der Bremsstufe (BS.i) und ein Aktivieren einer niedrigeren Bremsstufe (BS.i), in der eine geringere Dauerbrems-Ist-Bremswirkungsgröße (Dlst.i, Flst.i) erzeugt wird, geschlossen wird, wenn sich die Bremswirkungsgrößen-Kennzahl (DRatio, FRatio) infolge einer Ansteuerung der Dauerbremse (3, 4) mit einer bestimmten Bremsanforderungs-Sollgröße (zSoll, DSoll, FSoll) reduziert.

7. Verfahren nach einem der vorhergehenden Ansprüche, **dadurch gekennzeichnet, dass** als Bremsanforderungs-Sollgröße mindestens eine Größe ausgewählt aus der Gruppe bestehend aus einer Fahrzeug-Soll-Verzögerung (zSoll), einem Dauerbrems-Soll-Bremsmoment (DSoll) und/oder einer Dauerbrems-Soll-Bremskraft (FSoll) vorgegeben wird.

8. Verfahren nach einem der vorhergehenden Ansprüche, **dadurch gekennzeichnet, dass** eine Bremsstufen-Anzahl (A) an Bremsstufen (BS.i) in Abhängigkeit einer Anzahl (NK) an unterschiedlichen, den jeweiligen Bremsstufen (BS.i) zugeordneten Bremswirkungsgrößen-Kennzahlen (DRatio, FRatio) eingelernt wird.

9. Verfahren nach einem der vorhergehenden Ansprüche, **dadurch gekennzeichnet, dass** die Bremswirkungsgrößen-Kennzahl (DRatio, FRatio) einer jeweiligen Bremsstufe (BS.i) ebenfalls abgespeichert wird.

10. Verfahren nach einem der vorhergehenden Ansprüche, **dadurch gekennzeichnet, dass** die Dauerbrems-Ist-Bremswirkungsgröße durch ein Dauerbrems-Ist-Bremsmoment (Dlst.i), das in der jeweiligen Bremsstufe (BS.i) von der Dauerbremse (3, 4) erzeugt wird, und die maximale Dauerbrems-Bremswirkungsgröße durch ein während einer Ansteuerung der Dauerbremse (3, 4) mit der Bremsanforderungs-Sollgröße (zSoll, DSoll, FSoll) maximal erzeugbares Dauerbrems-Bremsmoment (DMax) gegeben ist, oder
die Dauerbrems-Ist-Bremswirkungsgröße durch eine Dauerbrems-Ist-Bremskraft (Flst.i), die in der jeweiligen Bremsstufe (BS.i) von der Dauerbremse (3, 4) erzeugt wird, und die maximale Dauerbrems-Bremswirkungsgröße durch eine während einer Ansteuerung der Dauerbremse (3, 4) mit der Bremsanforderungs-Sollgröße (zSoll, DSoll, FSoll) maximal erzeugbare Dauerbrems-Bremskraft (FMax) gegeben ist.

11. Verfahren nach einem der vorhergehenden Ansprüche, **dadurch gekennzeichnet, dass** jeder Bremsstufe (BS.i) ein Index (i) zugeordnet wird, wobei der Index (i) in Abhängigkeit der Bremswirkungsgrößen-Kennzahl (DRatio, FRatio) derartig festgelegt wird, dass die Bremsstufen (BS.i) in Abhängigkeit der Höhe der in der jeweiligen Bremsstufe (BS.i) erzeugten Dauerbrems-Ist-Bremswirkungsgröße (Dlst.i, Flst.i) geordnet werden.

12. Verfahren nach einem der vorhergehenden Ansprüche, **dadurch gekennzeichnet, dass** die Bremsanforderungs-Sollgröße (zSoll, DSoll, FSoll) in Form einer ansteigenden und/oder abfallenden Rampe (R1, R2) vorgegeben wird und das Bilden einer Bremswirkungsgrößen-Kennzahl (DRatio, FRatio), das Zuordnen der Bremswirkungsgrößen-Kennzahl (DRatio, FRatio) zu einer Bremsstufe (BS.i) der Dauerbremse (3, 4) und das Speichern der Bremsanforderungs-Sollgröße (zSoll, DSoll, FSoll) als Bremsstufen-Schwellenwert (BSu.i, BSo.i) derjenigen Bremsstufe (BS.i), der die Bremswirkungsgrößen-Kennzahl (DRatio, FRatio) zugeordnet ist, für jede der Bremsanforderungs-Sollgrößen (zSoll, DSoll, FSoll) erfolgt, mit der die Dauerbremse (3, 4) auf der ansteigenden und/oder abfallenden Rampe (R1, R2) angesteuert wird.

13. Verfahren nach Anspruch 12, **dadurch gekennzeichnet, dass** die abfallende Rampe (R1) zwischen einer minimalen Dauerbrems-Bremswirkungsgröße (DMin, FMin) und einer Referenz-Bremswirkungsgröße (DRef, FRef) der Dauerbremse (3, 4) in Richtung einem Erhöhen der Fahrzeug-Ist-Verzögerung (zlst) verläuft und die ansteigende Rampe (R2) zwischen der Referenz-Bremswirkungsgröße (DRef, FRef) und der minimalen Dauerbrems-Bremswirkungsgröße (DMin, FMin) in Richtung einem Reduzieren der Fahrzeug-Ist-Verzögerung (zlst), wobei die Referenz-Bremswirkungsgröße (DRef, FRef) charakterisiert, welche Bremswirkungsgröße (D, F) von der Dauerbremse (3, 4) unabhängig von einer Ansteuerung der Dauerbremse (3, 4) mit der Bremsanforderungs-Sollgröße (zSoll, DSoll, FSoll) maximal erzeugt werden kann.

14. Verfahren nach einem der Ansprüche 1 bis 11, **dadurch gekennzeichnet, dass** die Bremsanforderungs-Sollgröße (zSoll, DSoll, FSoll) in diskreten Werten und nichtkontinuierlich vorgegeben wird.

15. Bremssystem (1) für ein Nutzfahrzeug (100) mindestens aufweisend:
eine Dauerbremse (3, 4), wobei die Dauerbremse (3, 4) mit einer Bremsanforderungs-Sollgröße (zSoll, DSoll, FSoll) ansteuerbar ist zum Erhöhen oder zum Reduzieren einer Fahrzeug-Ist-Verzögerung (zlst) des Nutzfahrzeuges (1) durch Einstellen einer Bremswirkungsgröße (D, F) der Dauerbremse (3, 4), und
ein Assistenz-Steuermodul (30) zum Vorgeben der Bremsanforderungs-Sollgröße (zSoll, DSoll, FSoll) an die Dauerbremse (3, 4), wobei das Assistenz-Steuermodul (30) ausgebildet ist, in einem Verfahren nach einem der vorhergehenden Ansprüche Bremsstufen-Schwellwerte (BSu.i, BSo.i) von Bremsstufen (BS.i) der Dauerbremse (3, 4) einzulernen und in Abhängigkeit davon die Bremsanforderungs-Sollgröße (zSoll, DSoll, FSoll) zu ermitteln und an die Dauerbremse (3, 4) auszugeben.

16. Bremssystem (1) nach Anspruch 15, **dadurch gekennzeichnet, dass** die Dauerbremse als Motorstaubremse (3) und/oder als Dekompressionsbremse (4) ausgeführt ist.

17. Fahrzeug (100), insbesondere Nutzfahrzeug (100), mit einem Bremssystem (100) nach Anspruch 15 oder 16.

## Claims

1. A method for learning braking step threshold values (BSo.i, BSu.i) of a sustained-action brake (3, 4) operated in braking steps (BS.i) in a commercial vehicle (1), said method comprising at least the following steps:
- detecting a braking request setpoint (zSoll, DSoll, FSoll) and actuating the sustained-action brake (3, 4) with the detected braking request setpoint (zSoll, DSoll, FSoll) to increase or decrease a vehicle actual deceleration (zlst) of the commercial vehicle (1) by setting a braking effect variable (D, F) of the sustained-action brake (3, 4) (St1);
- detecting a sustained-action brake actual braking effect variable (DIst.i, Fist.i) and a maximum sustained-action brake braking effect variable (DMax, FMax), wherein the sustained-action brake actual braking effect variable (DIst.i, Fist.i) characterizes the braking effect variable (D, F) generated by the sustained-action brake (3, 4) as a result of the actuation with the braking request setpoint (zSoll, DSoll, FSoll), and characterizes the maximum sustained-action brake braking effect variable (DMax, FMax), which braking effect variable (D, F) can be generated maximally by the sustained-action brake (3, 4) during actuation of the sustained-action brake (3, 4) with the braking request setpoint (zSoll, DSoll, FSoll) (St2);
- forming a braking effect variable coefficient (DRatio, FRatio), wherein the braking effect variable coefficient (DRatio, FRatio) characterizes a ratio of the sustained-action brake actual braking effect variable (DIst.i, Fist.i) and the maximum sustained-action braking effect variable (DMax, FMax) which results from the actuation of the sustained-action brake (3, 4) with the braking request setpoint (zSoll, DSoll, FSoll) (St3);
- assigning the braking effect variable coefficient (DRatio, FRatio) to a braking step (BS.i) of the sustained-action brake (3, 4) in such a way that each braking step (BS.i) is assigned merely one braking effect variable coefficient (DRatio, FRatio)(St4); and
- storing the braking request setpoint (zSoll, DSoll, FSoll), which results from the braking effect variable coefficient (DRatio, FRatio), as a braking step threshold value (BSu.i, BSo.i) of the braking step (BS.i) to which the braking effect variable coefficient (DRatio, FRatio) is assigned, wherein the braking step threshold value (BSu.i, BSo.i) specifies at which braking request setpoint (zSoll, DSoll, FSoll) the respective braking step (BS.i) is activated or deactivated.

2. The method according to claim 1, **characterized in that** a braking step activation threshold value (BSu.i) indicates from which values of the braking requirement setpoint (zSoll, DSoll, FSoll) the respective braking step (BS.i) is activated in the case of an increase in the vehicle actual deceleration (zIst) as a result of the actuation with this braking requirement setpoint (zSoll, DSoll, FSoll), and a braking step deactivation threshold value (BSo.i) indicates from which values of the braking requirement setpoint (zSoll, DSoll, FSoll) the respective braking step (BS.i) is deactivated in the case of a reduction of the vehicle actual deceleration (zIst) as a result of the actuation with this braking requirement setpoint (zSoll, DSoll, FSoll).

3. The method according to claim 2, **characterized in that** the braking step activation threshold value (BSu.i) assigned to a braking step (BS.i) is not equal to the braking step deactivation threshold value (BSo.i) that is assigned to the same braking step (BS.i).

4. The method according to claim 2 or 3, **characterized in that** storing the braking requirement setpoint (zSoll, DSoll, FSoll) as a braking step activation threshold value (BSu.i) of a certain braking step (BS.i) takes place only if a braking step activation threshold (BSu.i) is not already stored for this braking step (BS.i)
- that is smaller than the braking requirement setpoint (zSoll, DSoll, FSoll), and/or
- for which the respective braking step (BS.i) has already been activated previously if the vehicle actual deceleration (zIst) increases as a result of an actuation of the sustained-action brake (3, 4) with this stored braking step activation threshold value (BSu.i).

5. The method according to any of claims 2 to 4, **characterized in that** storing the braking requirement setpoint (zSoll, DSoll, FSoll) as a braking step deactivation threshold value (BSo.i) of a certain braking step (BS.i) takes place only if this braking step (BS.i) has not already been assigned a braking step deactivation threshold value (BSo.i),
- which is smaller than the braking requirement setpoint (zSoll, DSoll, FSoll), and/or
- for which later deactivation of the same braking step (BS.i) is carried out in the event of a reduction in the actual vehicle deceleration (zIst) due to an actuation of the sustained-action brake (3, 4) with this stored braking step deactivation threshold value (BSu.i).

6. The method according to any of claims 2 to 5, **characterized in that** the activation of a higher braking step (BS.i), in which a higher sustained-action brake actual braking effect variable (DIst.i, Fist.i) is generated, is concluded if the braking effect variable coefficient (DRatio, FRatio) increases as a result of an actuation of the sustained-action brake (3, 4) with a certain braking requirement setpoint (zSoll, DSoll, FSoll) and that deactivation of the braking step (BS.i) and activation of a lower braking step (BS.i), in which a lower sustained-action brake actual braking effect variable (DIst.i, FIst.i) is generated, is concluded if the braking effect variable coefficient (DRatio, FRatio) is reduced as a result of an actuation of the sustained-action brake (3, 4) with a specific braking requirement setpoint (zSoll, DSoll, FSoll).

7. The method according to any of the preceding claims, **characterized in that** at least one variable selected from the group consisting of a vehicle deceleration setpoint (zSoll), a sustained-action brake setpoint braking torque (DSoll) and/or a sustained-action brake setpoint braking force (FSoll) is defined as a braking requirement setpoint.

8. The method according to any of the preceding claims, **characterized in that** a braking step number (A) of braking steps (BS.i) is learned depending on a number (NK) of different braking action variable coefficients (DRatio, FRatio) assigned to the respective braking steps (BS.i).

9. The method according to any of the preceding claims, **characterized in that** the braking action variable coefficient (DRatio, FRatio) of a respective braking step (BS.i) is likewise stored.

10. The method according to any of the preceding claims, **characterized in that** the sustained-action brake actual braking effect variable is caused by a sustained-action brake actual braking torque (DIst.i) generated by the sustained-action brake (3, 4) in the respective braking step (BS.i), and the maximum sustained-action brake braking effect variable is caused by a maximum generatable sustained-action brake braking torque (DMax) during an actuation of the sustained-action brake (3, 4) with the braking requirement setpoint (zSoll, DSoll, FSoll), or
the sustained-action brake actual braking effect variable is generated by a sustained-action brake actual braking force (FIst.i) generated by the sustained-action brake (3, 4) in the respective braking step (BS.i), and the maximum sustained-action brake braking effect variable is caused by a maximum generatable sustained-action brake braking force (FMax) generated by the sustained-action brake during an actuation of the sustained-action brake (3, 4) with the braking requirement setpoint (zSoll, DSoll, FSoll).

11. The method according to any of the preceding claims, **characterized in that** each braking step (BS.i) is assigned an index (i), wherein the index (i) is determined according to the braking effect variable coefficient (DRatio, FRatio) in such a way that the braking steps (BS.i) are determined depending on the level of the sustained-action brake actual braking effect variable (DIst.i, FIst.i) generated in the respective braking step (BS.i).

12. The method according to any of the preceding claims, **characterized in that** the braking requirement setpoint (zSoll, DSoll, FSoll) is specified in the form of an ascending and/or descending ramp (R1, R2) and forming a braking effect variable coefficient (DRatio, FRatio), assigning the braking effect variable coefficient (DRatio, FRatio) to a braking step (BS.i) of the sustained-action brake (3, 4) and storing the braking requirement setpoint (zSoll, DSoll, FSoll) as the braking step threshold value (BSu.i, BSo.i) of that braking step (BS.i) assigned to the braking effect variable coefficient (DRatio, FRatio) are carried out for each of the braking requirement setpoints (zSoll, DSoll, FSoll) with which the sustained-action brake (3, 4) is actuated on the rising and/or descending ramp (R1, R2).

13. The method according to claim 12, **characterized in that** the descending ramp (R1) runs between a minimum sustained-action brake braking effect variable (DMin, FMin) and a reference braking effect variable (DRef, FRef) of the sustained-action brake (3, 4) in the direction of an increase in the vehicle actual deceleration (zIst) and the ascending ramp (R2) runs between the reference braking effect variable (DRef, FRef) and the minimum sustained-action brake braking effect variable (DMin, FMin) in the direction of a reduction in the vehicle actual deceleration (zIst), wherein the reference braking effect variable (DRef, FRef) characterizes the maximum generatable braking effect variable (D, F) of the sustained-action brake (3, 4) regardless of an actuation of the sustained-action brake (3, 4) with the braking requirement setpoint (zSoll, DSoll, FSoll).

14. The method according to any of claims 1 to 11, **characterized in that** the braking requirement setpoint (zSoll, DSoll, FSoll) is specified in discrete values and non-continuously.

15. A braking system (1) for a commercial vehicle (100), comprising at least:
a sustained-action brake (3, 4), wherein the sustained-action brake (3, 4) is actuable with a braking requirement setpoint (zSoll, DSoll, FSoll) for increasing or reducing a vehicle actual deceleration (zIst) of the commercial vehicle (1) by adjusting a braking effect variable (D, F) of the sustained-action brake (3, 4), and
an assistance control module (30) for specifying the braking requirement setpoint (zSoll, DSoll, FSoll) to the sustained-action brake (3, 4), wherein the assistance control module (30) is configured to learn, in a method according any of the preceding claims, braking step threshold values (BSu.i, BSo.i) of braking steps (BS.i) of the sustained-action brake (3, 4) and, depending on the braking requirement, to determine and to output the braking requirement setpoint (zSoll, DSoll, FSoll) to the sustained-action brake (3, 4).

16. The braking system (1) according to claim 15, **characterized in that** the sustained-action brake is embodied as an engine exhaust brake and/or as a decompression brake.

17. A vehicle (100), in particular a commercial vehicle (100), having a braking system (1) according to claim 15 or 16.

## Revendications

1. Procédé pour apprendre des valeurs seuil de paliers de freinage (BSo.i, BSu.i) d'un frein d'endurance (3, 4) commuté dans des paliers de freinage (BS.i) dans un véhicule utilitaire (1), avec au moins les étapes suivantes :
- la détection d'une grandeur de consigne de demande de freinage (zSoll, DSoll, FSoll) et la commande du frein d'endurance (3, 4) avec la grandeur de consigne de demande de freinage (zSoll, DSoll, FSoll) détectée pour augmenter ou pour réduire une décélération réelle de véhicule (zIst) du véhicule utilitaire (1) par réglage d'une grandeur d'effet de freinage (D, F) du frein d'endurance (3, 4) (St1) ;
- la détection d'une grandeur d'effet de freinage réelle de frein d'endurance (DIst.i, Fist.i) et d'une grandeur d'effet de freinage maximale de frein d'endurance (Dmax, FMax), dans lequel la grandeur d'effet de freinage réelle de frein d'endurance (DIst.i, Fist.i) caractérise la grandeur d'effet de freinage (D, F) produite par le frein d'endurance (3, 4) à la suite de la commande avec la grandeur de consigne de demande de freinage (zSoll, DSoll, FSoll), et la grandeur d'effet de freinage maximale de frein d'endurance (Dmax, FMax) caractérise quelle grandeur d'effet de freinage (D, F) peut être produite au maximum par le frein d'endurance (3, 4) pendant une commande du frein d'endurance (3, 4) avec la grandeur de consigne de demande de freinage (zSoll, DSoll, FSoll) (St2) ;
- la formation d'un indicateur de grandeur d'effet de freinage (DRatio, FRatio), dans lequel l'indicateur de grandeur d'effet de freinage (DRatio, FRatio) caractérise un rapport de la grandeur d'effet de freinage réelle de frein d'endurance (DIst.i, Fist.i) et de la grandeur d'effet de freinage maximale de frein d'endurance (Dmax, FMax), qui résulte de la commande du frein d'endurance (3, 4) avec la grandeur de consigne de demande de freinage (zSoll, DSoll, FSoll) (St3) ;
- l'affectation de l'indicateur de grandeur d'effet de freinage (DRatio, FRatio) à un palier de freinage (BS.i) du frein d'endurance (3, 4), de telle sorte qu'un seul indicateur de grandeur d'effet de freinage (DRatio, FRatio) est affecté à chaque palier de freinage (BS.i) (St4) ; et
- la mémorisation de la grandeur de consigne de demande de freinage (zSoll, DSoll, FSoll), à la suite de laquelle l'indicateur de grandeur d'effet de freinage (DRatio, FRatio) est obtenue, en tant que valeur seuil de paliers de freinage (BSu.i, BSo.i) du palier de freinage (BS.i) auquel est affecté l'indicateur de grandeur d'effet de freinage (DRatio, FRatio), dans lequel la valeur seuil de paliers de freinage (BSu.i, BSo.i) indique pour quelle grandeur de consigne de demande de freinage (zSoll, DSoll, FSoll) le palier de freinage (BS.i) respectif est activé ou désactivé.

2. Procédé selon la revendication 1, **caractérisé en ce qu'**une valeur seuil d'activation de palier de freinage (BSu.i) indique à partir de quelles valeurs de la grandeur de consigne de demande de freinage (zSoll, DSoll, FSoll), lors d'une augmentation de la décélération réelle de véhicule (zIst) à la suite de la commande avec cette grandeur de consigne de demande de freinage (zSoll, DSoll, FSoll), le palier de freinage (BS.i) respectif est activé et une valeur seuil de désactivation de palier de freinage (BSo.i) indique à partir de quelles valeurs de la grandeur de consigne de demande de freinage (zSoll, DSoll, FSoll), lors d'une réduction de la décélération réelle de véhicule (zIst) à la suite de la commande avec cette grandeur de consigne de demande de freinage (zSoll, DSoll, FSoll), le palier de freinage (BS.i) respectif est désactivé.

3. Procédé selon la revendication 2, **caractérisé en ce que** la valeur seuil d'activation de palier de freinage (BSu.i) affectée à un palier de freinage (BS.i) est différente de la valeur seuil de désactivation de palier de freinage (BSo.i) affectée au même palier de freinage (BS.i).

4. Procédé selon la revendication 2 ou 3, **caractérisé en ce qu'**une mémorisation de la grandeur de consigne de demande de freinage (zSoll, DSoll, FSoll) en tant que valeur seuil d'activation de palier de freinage (BSu.i) d'un palier de freinage (BS.i) défini n'a lieu que lorsque pour ce palier de freinage (BS.i) une valeur seuil d'activation de palier de freinage (BSu.i) n'a pas déjà été mémorisée,
- qui est plus petite que la grandeur de consigne de demande de freinage (zSoll, DSoll, FSoll), et/ou
- pour laquelle, lors d'une augmentation de la décélération réelle de véhicule (zIst) à la suite d'une commande du frein d'endurance (3, 4), une activation antérieure du palier de freinage (BS.i) respectif s'effectue déjà avec cette valeur seuil d'activation de palier de freinage (BSu.i) mémorisée.

5. Procédé selon l'une quelconque des revendications 2 à 4, **caractérisé en ce qu'**une mémorisation de la grandeur de consigne de demande de freinage (zSoll, DSoll, FSoll) en tant que valeur seuil de désactivation de palier de freinage (BSo.i) d'un palier de freinage (BS.i) défini n'a lieu que lorsque pour ce palier de freinage (BS.i), une valeur seuil de désactivation de palier de freinage (BSo.i) n'a pas déjà été mémorisée,
- qui est plus petite que la grandeur de consigne de demande de freinage (zSoll, DSoll, FSoll), et/ou
- pour laquelle, lors d'une réduction de la décélération réelle de véhicule (zIst) à la suite d'une commande du frein d'endurance (3, 4), une désactivation postérieure du même palier de freinage (BS.i) s'effectue avec cette valeur seuil de désactivation de palier de freinage (BSu.i) mémorisée.

6. Procédé selon l'une quelconque des revendications 2 à 5, **caractérisé en ce qu'**une activation d'un palier de freinage (BS.i) plus élevé, dans lequel une grandeur d'effet de freinage réelle de frein d'endurance (DIst.i, FIst.i) plus élevée est produite, est déduite lorsque l'indicateur de grandeur d'effet de freinage (DRatio, FRatio) à la suite d'une commande du frein d'endurance (3, 4) avec une grandeur de consigne de demande de freinage (zSoll, DSoll, FSoll) définie augmente, et qu'une désactivation du palier de freinage (BS.i) et une activation d'un palier de freinage (BS.i) plus bas, dans lequel une grandeur d'effet de freinage réelle de frein d'endurance (DIst.i, FIst.i) plus petite est produite, est déduite lorsque l'indicateur de grandeur d'effet de freinage (DRatio, FRatio) à la suite d'une commande du frein d'endurance (3, 4) avec une grandeur de consigne de demande de freinage (zSoll, DSoll, FSoll) définie diminue.

7. Procédé selon l'une quelconque des revendications précédentes, **caractérisé en ce que**, en tant que grandeur de consigne de demande de freinage, au moins une grandeur est choisie dans le groupe constitué d'une décélération de consigne de véhicule (zSoll), d'un couple de freinage de consigne de frein d'endurance (DSoll) et/ou d'une force de freinage de consigne de frein d'endurance (FSoll).

8. Procédé selon l'une quelconque des revendications précédentes, **caractérisé en ce qu'**un nombre de paliers de freinage (A) de paliers de freinage (BS.i) est appris en fonction d'un nombre (NK) de différents indicateurs de grandeur d'effet de freinage (DRatio, FRatio) affectés aux paliers de freinage (BS.i) respectifs.

9. Procédé selon l'une quelconque des revendications précédentes, **caractérisé en ce que** l'indicateur de grandeur d'effet de freinage (DRatio, FRatio) d'un palier de freinage (BS.i) respectif est également mémorisé.

10. Procédé selon l'une quelconque des revendications précédentes, **caractérisé en ce que** la grandeur d'effet de freinage réelle de frein d'endurance est fournie par un couple de freinage réel de frein d'endurance (DISt.i), qui est produit dans le palier de freinage (BS.i) respectif par le frein d'endurance (3, 4), et la grandeur d'effet de freinage maximale de frein d'endurance, par un couple de freinage de frein d'endurance (DMax) pouvant être produit au maximum pendant une commande du frein d'endurance (3, 4) avec la grandeur de consigne de demande de freinage (zSoll, DSoll, FSoll), ou
la grandeur d'effet de freinage réelle de frein d'endurance est fournie par une force de freinage réelle de frein d'endurance (FIst.i), qui est produite dans le palier de freinage (BS.i) respectif par le frein d'endurance (3, 4), et la grandeur d'effet de freinage maximale de frein d'endurance par une force de freinage de frein d'endurance (FMax) pouvant être produite au maximum pendant une commande du frein d'endurance (3, 4) avec la grandeur de consigne de demande de freinage (zSoll, DSoll, FSoll).

11. Procédé selon l'une quelconque des revendications précédentes, **caractérisé en ce qu'**un indice (i) est affecté à chaque palier de freinage (BS.i), dans lequel l'indice (i) est établi en fonction de l'indicateur de grandeur d'effet de freinage (DRatio, FRatio), de telle sorte que les paliers de freinage (BS.i) sont rangés en fonction de l'importance de la grandeur d'effet de freinage réelle de frein d'endurance (DIst.i, FIst.i) produite dans le palier de freinage (BS.i) respectif.

12. Procédé selon l'une quelconque des revendications précédentes, **caractérisé en ce que** la grandeur de consigne de demande de freinage (zSoll, DSoll, FSoll) est prédéfinie sous forme d'une rampe ascendante et/ou descendante (R1, R2) et la formation d'un indicateur de grandeur d'effet de freinage (DRatio, FRatio), l'affectation de l'indicateur de grandeur d'effet de freinage (DRatio, FRatio) à un palier de freinage (BS.i) du frein d'endurance (3, 4) et la mémorisation de la grandeur de consigne de demande de freinage (zSoll, DSoll, FSoll) en tant que valeur seuil de paliers de freinage (BSu.i, BSo.i) du palier de freinage (BS.i) auquel est affecté l'indicateur de grandeur d'effet de freinage (DRatio, FRatio) s'effectuent pour chacune des grandeurs de consigne de demande de freinage (zSoll, DSoll, FSoll) avec laquelle le frein d'endurance (3, 4) est commandé sur la rampe ascendante et/ou descendante (R1, R2).

13. Procédé selon la revendication 12, **caractérisé en ce que** la rampe descendante (R1) s'étend entre une grandeur d'effet de freinage minimale de frein d'endurance (DMin, FMin) et une grandeur d'effet de freinage de référence (DRef, FRef) du frein d'endurance (3, 4) en direction d'une augmentation de la décélération réelle de véhicule (zIst) et la rampe ascendante (R2) est comprise entre la grandeur d'effet de freinage de référence (DRef, FRef) et la grandeur d'effet de freinage minimale de frein d'endurance (DMin, FMin) en direction d'une réduction de la décélération réelle de véhicule (zIst), dans lequel la grandeur d'effet de freinage de référence (DRef, FRef) caractérise quelle grandeur d'effet de freinage (D, F) peut être produite au maximum par le frein d'endurance (3, 4) indépendamment d'une commande du frein d'endurance (3, 4) avec la grandeur de consigne de demande de freinage (zSoll, DSoll, FSoll).

14. Procédé selon l'une quelconque des revendications 1 à 11, **caractérisé en ce que** la grandeur de consigne de demande de freinage (zSoll, DSoll, FSoll) est prédéfinie en valeurs discrètes et de façon discontinue.

15. Système de freinage (1) pour un véhicule utilitaire (100) présentant au moins :
un frein d'endurance (3, 4), dans lequel le frein d'endurance (3, 4) peut être commandé avec une grandeur de consigne de demande de freinage (zSoll, DSoll, FSoll) pour augmenter ou pour réduire une décélération réelle de véhicule (zIst) du véhicule utilitaire (1) par réglage d'une grandeur d'effet de freinage (D, F) du frein d'endurance (3, 4), et
un module de commande d'assistance (30) pour spécifier la grandeur de consigne de demande de freinage (zSoll, DSoll, FSoll) au frein d'endurance (3, 4), dans lequel le module de commande d'assistance (30) est réalisé pour apprendre dans un procédé selon l'une quelconque des revendications précédentes des valeurs seuil de paliers de freinage (BSu.i, BSo.i) de paliers de freinage (BS.i) du frein d'endurance (3, 4) et pour déterminer en fonction de celles-ci la grandeur de consigne de demande de freinage (zSoll, DSoll, FSoll) et pour la délivrer au frein d'endurance (3, 4).

16. Système de freinage (1) selon la revendication 15, **caractérisé en ce que** le frein d'endurance est réalisé sous la forme d'un frein sur échappement (3) et/ou sous la forme d'un frein à décompression (4).

17. Véhicule (100), en particulier véhicule utilitaire (100), avec un système de freinage (100) selon la revendication 15 ou 16.
